# EUROPEAN PATENT APPLICATION

(11) **EP 4 716 345 A1**
(43) Date of publication of application: **25.03.2026**
(21) Application number: 25202866.7
(22) Date of filing: 17.09.2025
(51) Int. Cl.: H04W 72/1268, H04W 72/566, H04W 72/231

(54) **METHODS AND APPARATUSES FOR ADAPTIVE LOGICAL CHANNEL PRIORITIZATION IN MOBILE COMMUNICATIONS**

(30) Priority: 20.09.2024 US 202463696868 P
(71) Applicant: HTC Corporation, Taoyuan City 330 (TW)
(72) Inventor: LEE, Yen-Yi, 330 Taoyuan City (TW)
(74) Representative: Schmidbauer, Andreas Konrad

(57) **Abstract**

Various solutions for adaptive logical channel prioritization (LCP) in mobile communications are described. An apparatus may select a plurality of logical channels, each configured with a priority, for an uplink (UL) grant, and apply an additional priority for at least one of the logical channels in an event that the at least one of the logical channels carries data with a remaining time of an associated packet data convergence protocol (PDCP) discard timer less than a threshold. Then, the apparatus may allocate resources of the UL grant to one or more of the logical channels, each associated with a positive number of tokens, in a decreasing priority order determined based on the additional priority being applied. The apparatus may further perform a new transmission based on the allocation of the resources of the UL grant.

## Description

### TECHNICAL FIELD

The present disclosure is generally related to mobile communications and, more particularly, to adaptive logical channel prioritization (LCP) in mobile communications.

### BACKGROUND

Unless otherwise indicated herein, approaches described in this section are not prior art to the claims listed below and are not admitted as prior art by inclusion in this section.

The wireless communications network has grown exponentially over the years. A long-term evolution (LTE) system offers high peak data rates, low latency, improved system capacity, and low operating cost resulting from simplified network architecture. LTE systems, also known as the 4^{th} generation (4G) system, also provide seamless integration to older wireless networks, such as GSM, CDMA, and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). Alternatively, a wireless network may include a hybrid of 2G/3G/4G systems. In 3^{rd} generation partner project (3GPP), the next generation mobile network (NGMN) board has decided to focus the future NGMN activities on defining the end-to-end requirements for 5^{th} generation (5G) new radio (NR) systems, 5G-advanced systems, and 6G systems.

LCP is a medium access control (MAC) layer procedure that is responsible for selecting which data to transmit when the available radio resources for uplink (UL) transmission are limited. In 3GPP Release 18 for 5G NR, a priority-based token bucket algorithm is adopted for UL resource allocation in the LCP procedure, where each logical channel is associated with a priority, a prioritized bit rate (PBR), and a bucket size duration (BSD). The basic idea is to meet the PBR for all selected logical channels in a decreasing priority order based on whether there are tokens available in the bucket of each logical channel. After the PBR of all selected logical channels is met, if any UL resource remains, all selected logical channels would be served in a strict decreasing priority order, regardless of the number of tokens in their buckets. Accordingly, the priority-based token bucket algorithm may achieve PBR-based fairness.

However, there may be some issues with the current LCP procedure. For example, the priority-based token bucket algorithm does not take into account the transmission requirement of delay-critical data in logical channels. In the cases where there is delay-critical data in a selected logical channel with a positive number of tokens in the bucket (i.e., Bj > 0), the selected logical channel may not be allocated resources to transmit its delay-critical data if it is a lower-priority logical channel, while other logical channels with higher priorities and having non-delay-critical data are allocated with resources to transmit their non-delay-critical data. As a result, non-delay critical data from other logical channels with higher priorities will occupy the uplink resources, causing delay-critical data (i.e., data with low remaining time) in the low-priority logical channel to be delayed and unable to meet the delay requirements. That is, the current LCP procedure may not ensure the in-time transmission of the delay-critical data, and this is detrimental to applications or services that require low-latency communication, such as extended reality (XR), remote control and teleoperation (e.g., telesurgery), industrial automation, and vehicle-to-everything (V2X) applications, etc.

Therefore, there is a need to provide proper schemes to address this issue.

### SUMMARY

The following summary is illustrative only and is not intended to be limiting in any way. That is, the following summary is provided to introduce concepts, highlights, benefits, and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is proposing schemes, concepts, designs, systems, methods, and/or apparatus pertaining to adaptive LCP in mobile communications. It is believed that the above-described issue would be avoided or otherwise alleviated by implementing one or more of the proposed schemes described herein.

In one aspect, an apparatus may comprise a transceiver that, during operation, wirelessly communicates with a network node. The apparatus may also comprise a processor communicatively coupled to the transceiver. The processor, during operation, may perform operations comprising selecting a plurality of logical channels for an UL grant, wherein each of the plurality of logical channels is configured with a priority. The processor may also perform operations comprising applying an additional priority for at least one of the plurality of logical channels in an event that at least one condition is met, wherein the at least one condition comprises a first condition that the at least one of the plurality of logical channels carries data with a remaining time of an associated packet data convergence protocol (PDCP) discard timer less than a first threshold. The processor may further perform operations comprising allocating resources of the UL grant to one or more of the plurality of logical channels in a decreasing priority order determined based on the additional priority being applied, wherein each of the one or more of the plurality of logical channels is associated with a positive number of tokens. The processor may further perform operations comprising performing, via the transceiver, a new transmission to the network node based on the allocation of the resources of the UL grant.

In one aspect, a network node may comprise a transceiver which, during operation, wirelessly communicates with an apparatus. The network node may also comprise a processor communicatively coupled to the transceiver. The processor, during operation, may perform operations comprising transmitting, via the transceiver, a radio resource control (RRC) signaling to the apparatus, wherein the RRC signaling comprises a LogicalChannelConfig information element (IE) to configure a priority for each of a plurality of logical channels and an additional threshold for at least one of the plurality of logical channels. The processor may further perform operations comprising receiving, via the transceiver, a new transmission from the apparatus based on an allocation of resources of an UL grant, wherein the resources of the UL grant are allocated to one or more of the plurality of logical channels in a decreasing priority order determined based on the additional priority being applied, and each of the one or more of the plurality of logical channels is associated with a positive number of tokens.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Internet-of-Things (IoT) and Narrow Band Internet of Things (NB-IoT), Industrial Internet of Things (lloT), beyond 5G (B5G), and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale, as some components may be shown to be out of proportion than the size in actual implementation in order to clearly illustrate the concept of the present disclosure.
FIG. 1 is a diagram depicting an example scenario of the priority-based token bucket algorithm for UL resource allocation in the LCP procedure under current 5G NR framework.
FIG. 2 is a diagram depicting an example scenario of a communication environment in which various solutions and schemes in accordance with the present disclosure may be implemented.
FIG. 3 is a diagram depicting an example scenario of the adaptive LCP procedure in accordance with an implementation of the present disclosure.
FIG. 4 is a diagram depicting an example scenario of the UL resource allocation in the adaptive LCP procedure in accordance with an implementation of the present disclosure.
FIG. 5 is a block diagram of an example communication system in accordance with an implementation of the present disclosure.
FIG. 6 is a flowchart of an example process in accordance with an implementation of the present disclosure.
FIG. 7 is a flowchart of another example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes, and/or solutions pertaining to adaptive LCP in mobile communications. According to the present disclosure, a number of possible solutions may be implemented separately or jointly. That is, although these possible solutions may be described below separately, two or more of these possible solutions may be implemented in one combination or another.

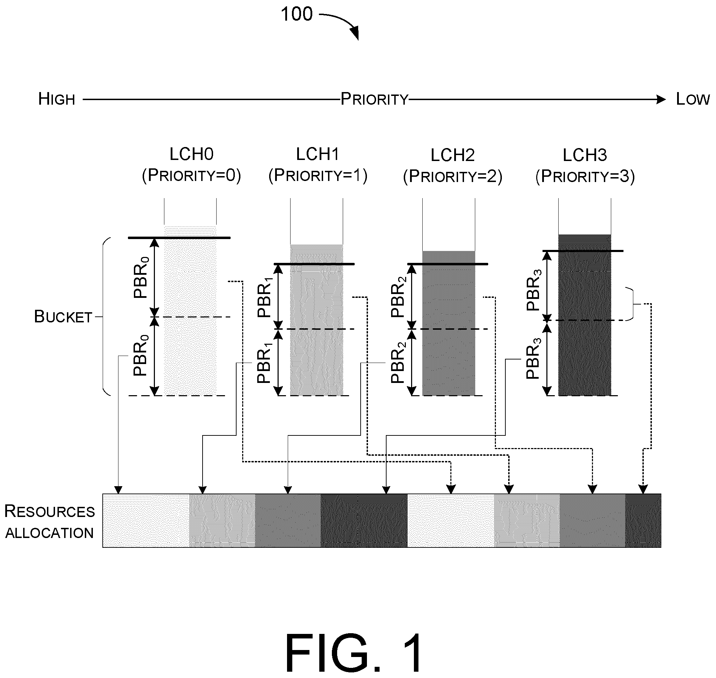

In the LCP procedure under current 5G NR framework, each logical channel is associated with a priority, a PBR, and a BSD, where the number of tokens (denoted as Bj) in the bucket of each logical channel is initialized to zero when the logical channels are established. Then, for each logical channel, the MAC entity increments Bj by the product PBR × T before every instance of the LCP procedure, where T is the time elapsed since Bj was last incremented. If the value of Bj is greater than the bucket size (i.e., PBR × BSD), Bj is set to the bucket size. FIG. 1 illustrates an example scenario 100 of the priority-based token bucket algorithm for UL resource allocation in the LCP procedure under current 5G NR framework. As shown in FIG. 1, each logical channel is configured with a priority, and a lower priority value indicates a higher priority (i.e., the priority of value=0 is the highest and the priority of value=3 is the lowest). After selecting logical channels for an UL grant, all selected logical channels with Bj > 0 are allocated resources in a decreasing priority order to meet the PBRs for all selected logical channels. After the resource allocation, Bj of each logical channel is decremented by the total size of MAC SDUs served to the logical channel j. Then, if any UL resource remains, all selected logical channels are served in a strict decreasing priority order (regardless of the value of Bj) until either the data for that logical channel or the UL grant is exhausted, whichever comes first. It should be noted that, in the present disclosure, the selection of logical channels in the LCP procedure is performed by the rules specified in 3GPP standards, and a detailed description thereof is omitted herein for brevity.

Although the priority-based token bucket algorithm adopted in the LCP procedure may achieve PBR-based fairness, it does not take into account the transmission requirement of delay-critical data in logical channels. In the cases where there is delay-critical data in a low-priority logical channel with a positive number of tokens in the bucket, the low-priority logical channel may not be allocated resources to transmit the delay-critical data if there are other logical channels with higher priorities, even though there is only non-delay-critical data in these high-priority logical channels. Consequently, the current LCP procedure may not ensure the in-time transmission of the delay-critical data.

In view of the above, the present disclosure proposes a number of schemes pertaining to adaptive LCP in mobile communications. According to the schemes of the present disclosure, new logical channel (LCH) parameters may be introduced to make the LCP procedure more adaptive to meet the delay requirements of data with low remaining time. Specifically, the new LCH parameters may include multiple logical channel priorities (besides the allowedPHY-Prioritylndex as defined in the LogicalChannelConfig IE) configured for one logical channel. For example, each logical channel may be configured with a priority which is used as the default priority in the LCP procedure, while some logical channel(s) may be configured with an additional priority which is applied instead of the default priority in the LCP procedure when certain condition(s) is/are met. In particular, the additional priority is higher than the default priority (e.g., the additional priority is the highest priority), such that when the additional priority is applied, the corresponding logical channel (e.g., a logical channel with delay-critical data) can be moved up in the priority order of all logical channels during the UL resource allocation in the LCP procedure. Furthermore, the new LCH parameters may also include a specific threshold (e.g., called priorityAdjustmentThreshold) which is used to determine whether the additional priority or the default priority is used for the LCP procedure. Accordingly, by applying the schemes of the present disclosure, logical channels with data having tight remaining time of PDCP discard timer will be prioritized for UL resource allocation, which allows the delay requirements to be met for the applications/services that require low-latency communication.

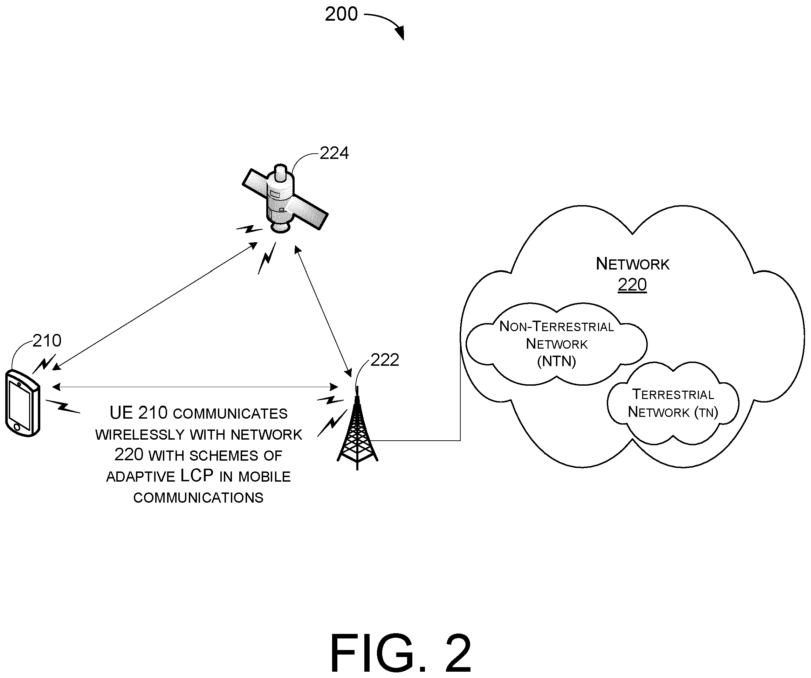

FIG. 2 illustrates an example scenario 200 of a communication environment in which various solutions and schemes in accordance with the present disclosure may be implemented. Scenario 200 involves a UE 210 in wireless communication with a network 220 (e.g., a wireless network including a non-terrestrial network (NTN) and a TN) via at least a terrestrial network node 222 (e.g., a base station (BS) such as an eNB, a gNB, or a transmission/reception point (TRP)) and/or at least a non-terrestrial network node 224 (e.g., a satellite). For example, the terrestrial network node 222 may form a TN serving cell for wireless communication with the UE 210, or the terrestrial network node 222 and the non-terrestrial network node 224 may form an NTN serving cell for wireless communication with the UE 210. In some implementations, the network 220 may be a 4G/5G/B5G/6G network, and the UE 210 may be a smartphone, a tablet computer, a laptop computer, or a notebook computer. Alternatively, the network 220 may be an IoT/ NB-loT/lloT network, and the UE 210 may be an IoT device such as an NB-loT UE or an enhanced machine-type communication (eMTC) UE (e.g., a bandwidth reduced low complexity (BL) UE or a coverage enhancement (CE) UE). In such communication environment, the UE 210, the network 220, the terrestrial network node 222, and/or the non-terrestrial network node 224 may implement various schemes pertaining to adaptive LCP in mobile communications in accordance with the present disclosure, as described below. It is noteworthy that, while the various proposed schemes may be individually or separately described below, in actual implementations, some or all of the proposed schemes may be utilized or otherwise implemented jointly. Of course, each of the proposed schemes may be utilized or otherwise implemented individually or separately.

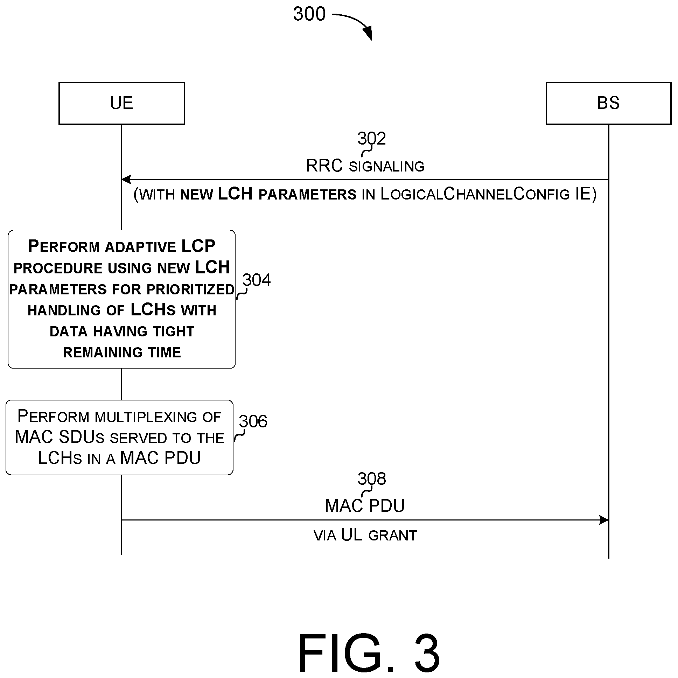

FIG. 3 illustrates an example scenario 300 of the adaptive LCP procedure in accordance with an implementation of the present disclosure. In step 302, the UE receives a radio resource control (RRC) signaling from the BS. Specifically, the RRC signaling includes the configuration of logical channels for the UE. The configuration may be contained in a LogicalChannelConfig IE in the RRC signaling. The LogicalChannelConfig IE may include legacy LCH parameters, such as a default priority (e.g., priority-1), a PBR, and a BSD for each logical channel, where the default priority, the PBR, and the BSD may be used for UL resource allocation. Specifically, the data of a logical channel is associated with a discard timer (e.g., PDCP discardTimer), and if the remaining time of the discard timer is less than a remainingTimeThreshold (i.e., a threshold on remaining time for triggering a delay status report (DSR) for the corresponding logical channel within a logical channel group (LCG), which can be configured in a MAC-CellGroupConfig IE), the data is considered as delay-critical data. If the data does not get transmitted before the discard timer expires, then the data is discarded. Furthermore, the LogicalChannelConfig IE may include new LCH parameters, such as an additional priority (e.g., called additional Priority, set to a value such as priority-2) and a specific threshold (which is an independent per-LCH threshold and may be called priorityAdjustmentThreshold), which are used to adjust the priority of a logical channel for UL resource allocation. For instance, the UE may first configure priority-1 as the logical channel priority for logical channel k in default, and then configure priority-2 as the logical channel priority for logical channel k when at least one of the following conditions is met: (i) logical channel k has or carries delay-critical data; (ii) logical channel k has or carries delay-critical data and the number of tokens of logical channel k (i.e., Bk) is larger or no smaller than a threshold (e.g., called token-threshold); (iii) the remaining time of the delay-critical data in logical channel k is less than or not greater than the specific threshold (e.g., called priorityAdjustmentThreshold); (iv) the network indicates/configures (e.g., via the same or another RRC signaling) the UE to configure priority-2 as the logical channel priority for logical channel k.

Next, in step 304, the UE performs the adaptive LCP procedure using the new LCH parameters for prioritized handling of logical channels with data having tight remaining time of the PDCP discard timer, as will be described in detail in the following embodiments. Specifically, the adaptive LCP procedure includes the process of UL resource allocation for a new transmission with an UL grant (e.g., a configured grant received via the same or different RRC signaling, or a dynamic grant received via a downlink control information (DCI)), and the UL resource allocation is handled with the logical channel priority order adjusted based on the additional priority and the specific threshold (e.g., called priorityAdjustmentThreshold). In step 306, the UE multiplexes the MAC service data units (SDUs) served to the logical channels in a MAC protocol data unit (PDU). Then, in step 308, the MAC PDU is passed down to the Physical Layer (or called Layer-1 (L1)) through a transport channel for a new transmission on the UL grant to the BS.

To be more specific, the process of the UL resource allocation may include two rounds of resource allocation. To being with, when a new transmission is (to be) performed, the MAC entity at the UE may consider a PDCP SDU associated with a logical channel to be priority adjustable if the logical channel is configured with priorityAdjustmentThreshold and if the PDCP SDU has a PDU set remaining time (i.e., the remaining time of the associated PDCP discard timer) less than the priorityAdjustmentThreshold. In the first round of resource allocation, the MAC entity at the UE may allocate resources to the logical channels as follows. If, among all its data available for this transmission, a logical channel has a priority adjustable PDCP SDU at the time of the first symbol of this transmission, the MAC entity applies the additional priority of this logical channel. Subsequently, the logical channels selected for the UL grant with Bj > 0 (Bj is maintained for each logical channel j) are allocated resources in a decreasing priority order (determined based on the additional priority being applied). If the PBR of a logical channel is set to infinity, the MAC entity may allocate resources for all the data that is available for transmission on the logical channel before meeting the PBR of the lower priority logical channel(s). Then, the MAC entity may decrement Bj by the total size of MAC SDUs served to logical channel j above.

After the first round of resource allocation, if any resources remain, then the process may continue with the second round of resource allocation. Specifically, in the second round of resource allocation, the MAC entity may apply the default priority of a logical channel if this logical channel has applied the additional priority in the first round of resource allocation and does not have any priority adjustable PDCP SDUs left (i.e., this logical channel no longer has/carries delay-critical data). Subsequently, all the logical channels selected for the UL grant are served in a strict decreasing priority order (regardless of the value of Bj) until either the data for that logical channel or the UL grant is exhausted, whichever comes first. For the second round of resource allocation, logical channels applied with equal priority should be served equally.

In some implementations, when a new transmission is (to be) performed, the MAC entity in the UE may first check if a logical channel is configured with priorityAdjustmentThreshold and has a PDCP SDU available for this transmission. If the first checking result is positive, the MAC entity may secondly check if the PDCP entity associated with this logical channel is either configured with pdu-SetDiscard (i.e., a parameter indicating PDU set based discarding), and the PDU set remaining time of the PDCP SDU (i.e., the shortest remaining time till discardTimer expiry among the remaining times of all PDCP SDUs belonging to the same PDU set), evaluated at the time of the first symbol of this transmission, is less than the priorityAdjustmentThreshold. Additionally, or optionally, if the first checking result is positive, the MAC entity may secondly check if the PDCP entity associated with this logical channel is not configured with pdu-SetDiscard, and the remaining time of discardTimer of the PDCP SDU, evaluated at the time of the first symbol of this transmission, is less than the priorityAdjustmentThreshold. If either of the second checking results is positive, the MAC entity may consider this PDCP SDU being priority adjustable. Later, in the process of the UL resource allocation, the MAC entity in the UE may check if a logical channel has a priority adjustable PDCP SDU, and if so, apply additional Priority of this logical channel.

In some implementations, the additional priority may be applied to all data in the corresponding logical channel (e.g., logical channel k).

In some implementations, the additional priority may be applied only to the delay-critical data in the corresponding logical channel (e.g., logical channel k).

In some implementations, the additional priority may be higher than the default priority (i.e., the numeric value of the additional priority is smaller or no larger than the numeric value of the default priority).

In some implementations, the token-threshold may be configured in the LogicalChannelConfig IE or another RRC signaling.

In some implementations, the specific threshold (e.g., called priorityAdjustmentThreshold) may be configured in the LogicalChannelConfig IE or another RRC signaling.

In some implementations, the network may indicate/configure the UE to configure priority-2 as the logical channel priority for logical channel k after the network receives a delay status report (DSR) from the UE.

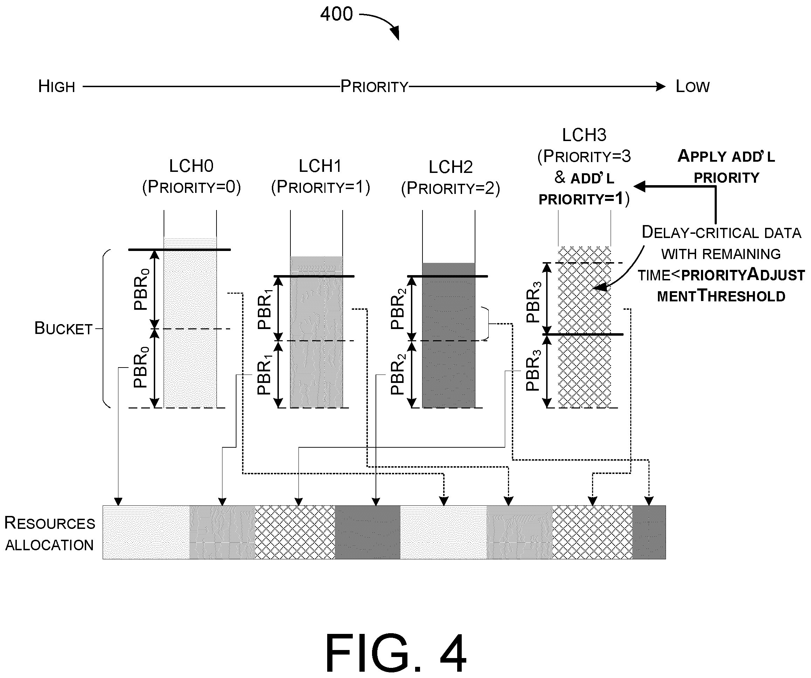

FIG. 4 illustrates an example scenario 400 of the UL resource allocation in the adaptive LCP procedure in accordance with an implementation of the present disclosure. As shown in FIG. 4, each logical channel is configured with a (default) priority, e.g., the priority of value=0 is the highest priority and the priority of value=3 is the lowest priority, where the logical channel with priority=3 has delay-critical data buffered therein. Specifically, the logical channel with priority=3 is then applied with an additional priority=1 which replaces/overrides the default priority=3, when the (smallest) remaining time of running PDCP discardTimers among all the PDCP SDUs buffered for the logical channel is less than the newly introduced threshold (e.g., priorityAdjustmentThreshold). That is, the additional priority moves the logical channel up in the priority order, and as long as the logical channel is applied with the additional priority and has a positive number of tokens (i.e., Bj > 0), the UE may allocate resources to the logical channel with delay-critical data.

### Illustrative Implementations

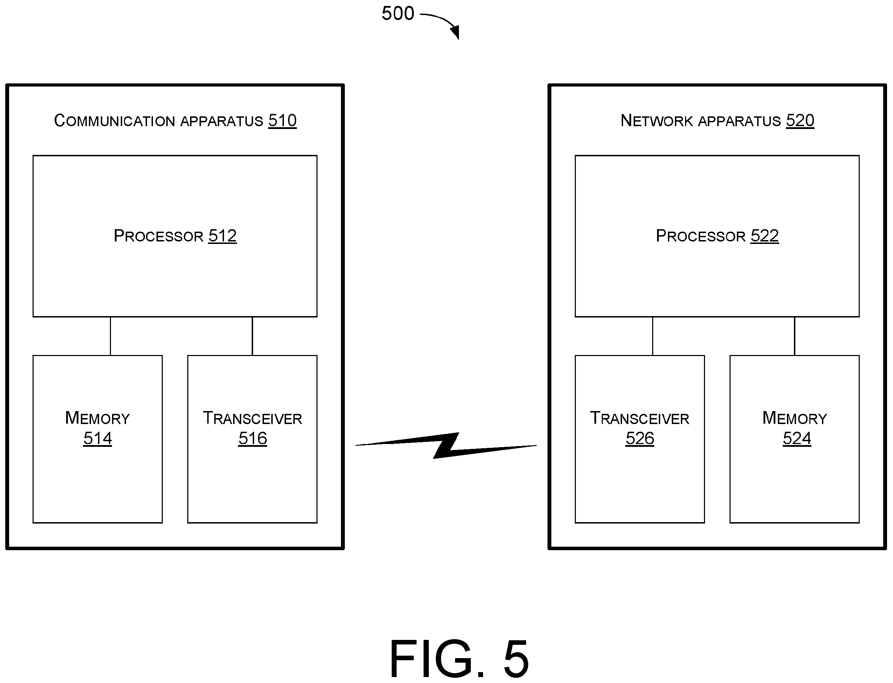

FIG. 5 illustrates an example communication system 500 having an example communication apparatus 510 and an example network apparatus 520 in accordance with an implementation of the present disclosure. Each of communication apparatus 510 and network apparatus 520 may perform various functions to implement schemes, techniques, processes, and methods described herein pertaining to adaptive LCP in mobile communications, including scenarios/schemes described above as well as processes 600 and 700 described below.

Communication apparatus 510 may be a part of an electronic apparatus, which may be a dual-steer device containing one or more UEs such as a portable or mobile apparatus, a wearable apparatus, a wireless communication apparatus, or a computing apparatus. For instance, communication apparatus 510 may be implemented in a smartphone, a smartwatch, a personal digital assistant, an electronic control unit (ECU) in a vehicle, a digital camera, or a computing equipment such as a tablet computer, a laptop computer, or a notebook computer. Communication apparatus 510 may also be a part of a machine type apparatus, which may be an loT, NB-IoT, eMTC, IIoT UE, such as an immobile or a stationary apparatus, a home apparatus, a roadside unit (RSU), a wire communication apparatus, or a computing apparatus. For instance, communication apparatus 510 may be implemented in a smart thermostat, a smart fridge, a smart door lock, a wireless speaker, or a home control center. Alternatively, communication apparatus 510 may be implemented in the form of one or more integrated-circuit (IC) chips, such as, for example and without limitation, one or more single-core processors, one or more multi-core processors, one or more reduced-instruction-set computing (RISC) processors, or one or more complex-instruction-set-computing (CISC) processors. Communication apparatus 510 may include at least some of those components shown in FIG. 5, such as a processor 512, for example. Communication apparatus 510 may further include one or more other components not pertinent to the proposed schemes of the present disclosure (e.g., internal power supply, display device and/or user interface device), and, thus, such component(s) of communication apparatus 510 are neither shown in FIG. 5 nor described below in the interest of simplicity and brevity.

Network apparatus 520 may be a part of an electronic apparatus, which may be a network node such as a satellite, a BS, a small cell, a router, or a gateway of a 4G/5G/B5G/6G, NR, loT, NB-loT, or IIoT network. Alternatively, network apparatus 520 may be implemented in the form of one or more IC chips, such as, for example and without limitation, one or more single-core processors, one or more multi-core processors, or one or more RISC or CISC processors. Network apparatus 520 may include at least some of those components shown in FIG. 5, such as a processor 522, for example. Network apparatus 520 may further include one or more other components not pertinent to the proposed scheme of the present disclosure (e.g., internal power supply, display device and/or user interface device), and, thus, such component(s) of network apparatus 520 are neither shown in FIG. 5 nor described below in the interest of simplicity and brevity.

In one aspect, each of processor 512 and processor 522 may be implemented in the form of one or more single-core processors, one or more multi-core processors, or one or more CISC processors. That is, even though a singular term "a processor" is used herein to refer to processor 512 and processor 522, each of processor 512 and processor 522 may include multiple processors in some implementations and a single processor in other implementations in accordance with the present disclosure. In another aspect, each of processor 512 and processor 522 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 512 and processor 522 is a special-purpose machine specifically designed, arranged and configured to perform specific tasks in a device (e.g., as represented by communication apparatus 510) and a network node (e.g., as represented by network apparatus 520) in accordance with various implementations of the present disclosure.

In some implementations, communication apparatus 510 may also include a transceiver 516 coupled to processor 512 and capable of wirelessly transmitting and receiving data. In some implementations, transceiver 516 may be capable of wirelessly communicating with different types of UEs and/or wireless networks of different RATs. In some implementations, transceiver 516 may be equipped with a plurality of antenna ports (not shown) such as, for example, four antenna ports. That is, transceiver 516 may be equipped with multiple transmit antennas and multiple receive antennas for multiple-input multiple-output (MIMO) wireless communications. In some implementations, network apparatus 520 may also include a transceiver 526 coupled to processor 522. Transceiver 526 may include a transceiver capable of wirelessly transmitting and receiving data. In some implementations, transceiver 526 may be capable of wirelessly communicating with different types of UEs of different RATs. In some implementations, transceiver 526 may be equipped with a plurality of antenna ports (not shown) such as, for example, four antenna ports. That is, transceiver 526 may be equipped with multiple transmit antennas and multiple receive antennas for MIMO wireless communications.

In some implementations, communication apparatus 510 may further include a memory 514 coupled to processor 512 and capable of being accessed by processor 512 and storing data therein. In some implementations, network apparatus 520 may further include a memory 524 coupled to processor 522 and capable of being accessed by processor 522 and storing data therein. Each of memory 514 and memory 524 may include a type of random-access memory (RAM) such as dynamic RAM (DRAM), static RAM (SRAM), thyristor RAM (TRAM), and/or zero-capacitor RAM (Z-RAM). Alternatively, or additionally, each of memory 514 and memory 524 may include a type of read-only memory (ROM) such as mask ROM, programmable ROM (PROM), erasable programmable ROM (EPROM), and/or electrically erasable programmable ROM (EEPROM). Alternatively, or additionally, each of memory 514 and memory 524 may include a type of non-volatile random-access memory (NVRAM) such as flash memory, solid-state memory, ferroelectric RAM (FeRAM), magnetoresistive RAM (MRAM), and/or phase-change memory.

Each of communication apparatus 510 and network apparatus 520 may be a communication entity capable of communicating with each other using various proposed schemes in accordance with the present disclosure. For illustrative purposes and without limitation, a description of capabilities of communication apparatus 510, as a UE, and network apparatus 520, as a network node (e.g., BS), is provided below with processes 600 and 700.

### Illustrative Processes

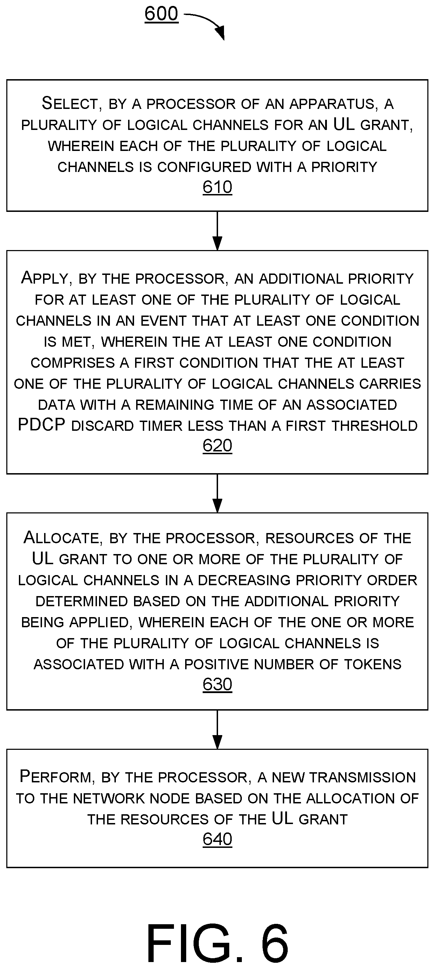

FIG. 6 illustrates an example process 600 in accordance with an implementation of the present disclosure. Process 600 may be an example implementation of above scenarios/schemes, whether partially or completely, with respect to adaptive LCP in mobile communications. Process 600 may represent an aspect of implementation of features of communication apparatus 510. Process 600 may include one or more operations, actions, or functions as illustrated by one or more of blocks 610 to 640. Although illustrated as discrete blocks, various blocks of process 600 may be divided into additional blocks, combined into fewer blocks, or eliminated, depending on the desired implementation. Moreover, the blocks of process 600 may be executed in the order shown in FIG. 6 or, alternatively in a different order. Process 600 may be implemented by or in communication apparatus 510 or any suitable UE or machine type device. Solely for illustrative purposes and without limiting the scope, process 600 is described below in the context of communication apparatus 510, as a UE, and network apparatus 520, as a network node (e.g., a BS such as gNB). Process 600 may begin at block 610.

At block 610, process 600 may involve processor 512 of communication apparatus 510, selecting a plurality of logical channels for an UL grant. Process 600 may proceed from block 610 to block 620.

At block 620, process 600 may involve processor 512 applying an additional priority for at least one of the plurality of logical channels in an event that at least one condition is met, wherein the at least one condition comprises a first condition that the at least one of the plurality of logical channels carries data with a remaining time of an associated PDCP discard timer less than a first threshold (e.g., called priorityAdjustmentThreshold). Process 600 may proceed from block 620 to block 630.

At block 630, process 600 may involve processor 512 allocating resources of the UL grant to one or more of the plurality of logical channels in a decreasing priority order determined based on the additional priority being applied, wherein each of the one or more of the plurality of logical channels is associated with a positive number of tokens. Process 600 may proceed from block 630 to block 640.

At block 640, process 600 may involve processor 512 performing, via transceiver 516, a new transmission to network apparatus 520 based on the allocation of the resources of the UL grant.

In some implementations, process 600 may further involve processor 512 applying the priority as a default priority for each of the plurality of logical channels, except for the at least one of the plurality of logical channels that is applied with the additional priority.

In some implementations, the priority, the additional priority, and the first threshold may be configured in a LogicalChannelConfig IE of an RRC signaling received from network apparatus 520.

In some implementations, the additional priority may be applied to all data in the at least one of the plurality of logical channels in the event that the at least one condition is met.

In some implementations, the additional priority may be higher than the priority.

In some implementations, the first condition may further specify that the data is a PDCP SDU and a PDCP entity associated with the at least one of the plurality of logical channels is not configured with a parameter (e.g., pdu-SetDiscard) indicating PDU set based discarding.

In some implementations, the at least one condition may further include a second condition that the at least one of the plurality of logical channels carries a PDCP SDU with a PDU set remaining time less than the first threshold.

In some implementations, the PDU set remaining time is a shortest remaining time till an expiry of an associated PDCP discard timer expiry, among the remaining times of all PDCP SDUs belonging to a same PDU set as the PDCP SDU.

In some implementations, the second condition may further specify that a PDCP entity associated with the at least one of the plurality of logical channels is configured with a parameter (e.g., pdu-SetDiscard) indicating PDU set based discarding.

In some implementations, the first condition may further specify that the remaining time of the associated PDCP discard timer being less than the first threshold is evaluated at a time of a first symbol of the new transmission.

In some implementations, the second condition may further specify that the PDU set remaining time of the PDCP SDU being less than the first threshold is evaluated at a time of a first symbol of the new transmission.

In some implementations, process 600 may further involve processor 51 applying the priority for the at least one of the plurality of logical channels and allocating the remaining resources of the UL grant to the plurality of logical channels in a strict decreasing priority order, in an event that there are remaining resources of the UL grant after the allocation of the resources of the UL grant and the at least one of the plurality of logical channels no longer carries data with the remaining time of the associated PDCP discard timer less than the first threshold or with a PDU set remaining time less than the first threshold.

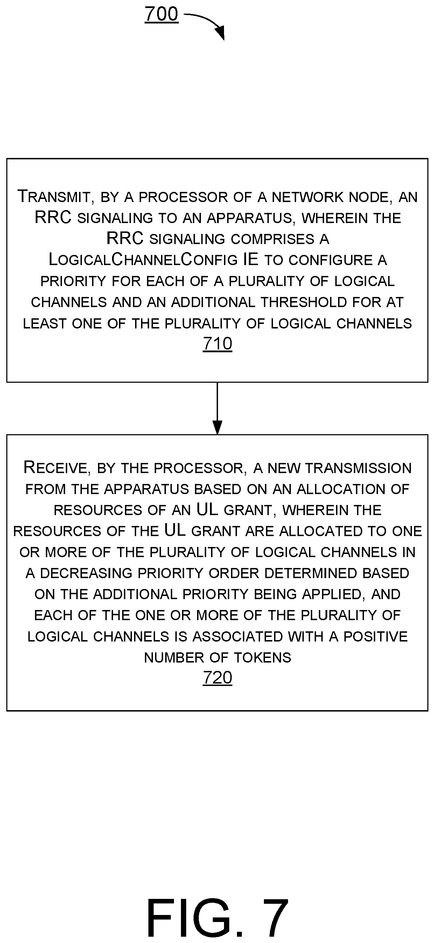

FIG. 7 illustrates an example process 700 in accordance with an implementation of the present disclosure. Process 700 may be an example implementation of above scenarios/schemes, whether partially or completely, with respect to adaptive LCP in mobile communications. Process 700 may represent an aspect of implementation of features of network apparatus 520. Process 700 may include one or more operations, actions, or functions as illustrated by one or more of blocks 710 to 720. Although illustrated as discrete blocks, various blocks of process 700 may be divided into additional blocks, combined into fewer blocks, or eliminated, depending on the desired implementation. Moreover, the blocks of process 700 may be executed in the order shown in FIG. 7 or, alternatively in a different order. Process 700 may be implemented by or in network apparatus 520 as well as any variations thereof. Solely for illustrative purposes and without limiting the scope, process 700 is described below in the context of communication apparatus 510, as a UE, and network apparatus 520, as a network node (e.g., a BS such as gNB). Process 700 may begin at block 710.

At block 710, process 700 may involve processor 522 of network apparatus 520, transmitting, via transceiver 526, an RRC signaling to communication apparatus 510, wherein the RRC signaling comprises a LogicalChannelConfig information element (IE) to configure a priority for each of a plurality of logical channels and an additional threshold for at least one of the plurality of logical channels. Process 700 may proceed from block 710 to block 720.

At block 720, process 700 may involve processor 522 receiving, via transceiver 526, a new transmission from communication apparatus 510 based on an allocation of resources of an UL grant, wherein the resources of the UL grant are allocated to one or more of the plurality of logical channels in a decreasing priority order determined based on the additional priority being applied, and each of the one or more of the plurality of logical channels is associated with a positive number of tokens.

In some implementations, the decreasing priority order may be determined based on the priority being applied as a default priority for each of the plurality of logical channels, except for the at least one of the plurality of logical channels that is applied with the additional priority.

In some implementations, the additional priority may be applied in an event that at least one condition is met, wherein the at least one condition comprises a first condition that the at least one of the plurality of logical channels carries data with a remaining time of an associated PDCP discard timer less than a first threshold (e.g., called priorityAdjustmentThreshold) configured in the LogicalChannelConfig IE.

In some implementations, the additional priority may be applied to all data in the at least one of the plurality of logical channels in the event that the at least one condition is met.

In some implementations, the additional priority may be higher than the priority.

In some implementations, the first condition may further specify that the data is a PDCP SDU and a PDCP entity associated with the at least one of the plurality of logical channels is not configured with a parameter (e.g., pdu-SetDiscard) indicating PDU set based discarding.

In some implementations, the at least one condition may further include a second condition that the at least one of the plurality of logical channels carries a PDCP SDU with a PDU set remaining time less than the first threshold.

In some implementations, the PDU set remaining time may be a shortest remaining time till an expiry of an associated PDCP discard timer expiry, among the remaining times of all PDCP SDUs belonging to a same PDU set to which as the PDCP SDU belongs.

In some implementations, the second condition may further specify that a PDCP entity associated with the at least one of the plurality of logical channels is configured with a parameter (e.g., pdu-SetDiscard) indicating PDU set based discarding.

In some implementations, the first condition may further specifies that the remaining time of the associated PDCP discard timer being less than the first threshold is evaluated at a time of a first symbol of the new transmission.

In some implementations, the second condition may further specify that the PDU set remaining time of the PDCP SDU being less than the first threshold is evaluated at a time of a first symbol of the new transmission.

In some implementations, in an event that there are remaining resources of the UL grant after the allocation of the resources of the UL grant and the at least one of the plurality of logical channels no longer carries data with the remaining time of the associated PDCP discard timer less than the first threshold or with a PDU set remaining time less than the first threshold, the priority may be applied for the at least one of the plurality of logical channels and the remaining resources of the UL grant may be allocated to the plurality of logical channels in a strict decreasing priority order.

In light of the above-described embodiments, it is noteworthy that, by applying the schemes of the present disclosure, the UL resource allocation in the LCP procedure is enhanced with new LCH parameters, such as an additional priority and a specific threshold (e.g., called priorityAdjustmentThreshold) to ensure that logical channels carrying data with a remaining time of an associated PDCP discard timer less than the specific threshold are prioritized for UL resource allocation, which allows the delay requirements to be met for the applications/services that require low-latency communication. Accordingly, the adaptive LCP procedure may provide efficient and effective support of scheduling to realize high system capacity for low-latency services, such as XR services.

### Additional Notes

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. An apparatus, comprising:
a transceiver which, during operation, wirelessly communicates with a network node; and
a processor communicatively coupled to the transceiver such that, during operation, the processor performs operations comprising:
selecting a plurality of logical channels for an uplink (UL) grant, wherein each of the plurality of logical channels is configured with a priority;
applying an additional priority for at least one of the plurality of logical channels in an event that at least one condition is met, wherein the at least one condition comprises a first condition that the at least one of the plurality of logical channels carries data with a remaining time of an associated packet data convergence protocol (PDCP) discard timer less than a first threshold;
allocating resources of the UL grant to one or more of the plurality of logical channels in a decreasing priority order determined based on the additional priority being applied, wherein each of the one or more of the plurality of logical channels is associated with a positive number of tokens; and
performing, via the transceiver, a new transmission to the network node based on the allocation of the resources of the UL grant.

2. The apparatus of Claim 1, wherein, during operation, the processor further performs operations comprising:
applying the priority as a default priority for each of the plurality of logical channels, except for the at least one of the plurality of logical channels that is applied with the additional priority.

3. The apparatus of Claim 1, wherein the priority, the additional priority and the first threshold are configured in a LogicalChannelConfig information element (IE) of a radio resource control (RRC) signaling received from the network node, and wherein the additional priority is higher than the priority.

4. The apparatus of Claim 1, wherein the first condition further specifies that the data is a PDCP service data unit (SDU) and a PDCP entity associated with the at least one of the plurality of logical channels is not configured with a parameter indicating PDU set based discarding.

5. The apparatus of Claim 1, wherein the at least one condition further comprises a second condition that the at least one of the plurality of logical channels carries a PDCP service data unit (SDU) with a PDU set remaining time less than the first threshold, wherein the PDU set remaining time is a shortest remaining time till an expiry of an associated PDCP discard timer, among remaining times of all PDCP SDUs belonging to a same PDU set as the PDCP SDU.

6. The apparatus of Claim 5, wherein the second condition further specifies that a PDCP entity associated with the at least one of the plurality of logical channels is configured with a parameter indicating PDU set based discarding.

7. The apparatus of Claim 5, wherein the second condition further specifies that the PDU set remaining time of the PDCP SDU being less than the first threshold is evaluated at a time of a first symbol of the new transmission.

8. The apparatus of Claim 1, wherein the first condition further specifies that the remaining time of the associated PDCP discard timer being less than the first threshold is evaluated at a time of a first symbol of the new transmission.

9. The apparatus of Claim 1, wherein, during operation, the processor further performs operations comprising:
in an event that there are remaining resources of the UL grant after the allocation of the resources of the UL grant and the at least one of the plurality of logical channels no longer carries data with the remaining time of the associated PDCP discard timer less than the first threshold or with a PDU set remaining time less than the first threshold, applying the priority for the at least one of the plurality of logical channels and allocating the remaining resources of the UL grant to the plurality of logical channels in a strict decreasing priority order.

10. A network node, comprising:
a transceiver which, during operation, wirelessly communicates with an apparatus; and
a processor communicatively coupled to the transceiver such that, during operation, the processor performs operations comprising:
transmitting, via the transceiver, a radio resource control (RRC) signaling to the apparatus, wherein the RRC signaling comprises a LogicalChannelConfig information element (IE) to configure a priority for each of a plurality of logical channels and an additional threshold for at least one of the plurality of logical channels; and
receiving, via the transceiver, a new transmission from the apparatus based on an allocation of resources of an uplink (UL) grant, wherein the resources of the UL grant are allocated to one or more of the plurality of logical channels in a decreasing priority order determined based on the additional priority being applied, and each of the one or more of the plurality of logical channels is associated with a positive number of tokens.

11. The network node of Claim 10, wherein the decreasing priority order is determined based on the priority being applied as a default priority for each of the plurality of logical channels, except for the at least one of the plurality of logical channels that is applied with the additional priority.

12. The network node of Claim 10, wherein the additional priority is applied in an event that at least one condition is met, wherein the at least one condition comprises a first condition that the at least one of the plurality of logical channels carries data with a remaining time of an associated packet data convergence protocol (PDCP) discard timer less than a first threshold configured in the LogicalChannelConfig IE.

13. The network node of Claim 12, wherein the first condition further specifies that the data is a PDCP service data unit (SDU) and a PDCP entity associated with the at least one of the plurality of logical channels is not configured with a parameter indicating PDU set based discarding.

14. The network node of Claim 12, wherein the at least one condition further comprises a second condition that the at least one of the plurality of logical channels carries a PDCP SDU with a PDU set remaining time less than the first threshold, wherein the PDU set remaining time is a shortest remaining time till an expiry of an associated PDCP discard timer, among remaining times of all PDCP SDUs belonging to a same PDU set as the PDCP SDU.

15. The network node of Claim 14, wherein the second condition further specifies that a PDCP entity associated with the at least one of the plurality of logical channels is configured with a parameter indicating PDU set based discarding.
